# EUROPÄISCHE PATENTSCHRIFT

(11) **EP 0 624 976 B1**
(45) Veröffentlichungstag und Bekanntmachung des Hinweises auf die Patenterteilung: **11.11.1998**
(21) Anmeldenummer: 94201217.0
(22) Anmeldetag: 02.05.1994
(51) Int. Cl.: H04N 5/60, H04N 5/46

(54) **Schaltungsanordnung zum Demodulieren der Tonsignale in einem Fernsehsignal**
Circuit for demodulating the sound signals of a television signal
Circuit pour démoduler les signaux de son dans un signal de télévision

(30) Priorität: 07.05.1993 DE 4315128
(43) Veröffentlichungstag der Anmeldung: 17.11.1994
(73) Patentinhaber: Philips Patentverwaltung GmbH, 22335 Hamburg (DE); Koninklijke Philips Electronics N.V., 5621 BA Eindhoven (NL)
(72) Erfinder: Brilka, Joachim, c/o Philips Patentverwaltung GmbH, D-20097 Hamburg (DE); Weltersbach, Wolfgang, c/o Philips, D-20097 Hamburg (DE)
(74) Vertreter: Peters, Carl Heinrich, Dipl.-Ing.

(56) Entgegenhaltungen:
- EP-A- 0 392 772
- DE-A- 2 843 977
- DE-A- 3 411 791
- US-A- 4 660 088
- IEEE TRANSACTIONS ON CONSUMER ELECTRONICS, Bd.36, Nr.3, 30. August 1990, NEW YORK US Seiten 407 - 413, XP000162868 MCGINN M. 'An Advanced I.F. Amplifier & AFT System suitable for HDTV'
- IEEE TRANSACTIONS ON CONSUMER ELECTRONICS, Bd.28, Nr.4, 30. November 1982, NEW YORK US Seiten 489 - 503 BUHSE U. 'THE GERMAN 2-CARRIER-SYSTEM FOR TERRESTRIAL TV-SOUND TRANSMISSION SYSTEMS AND INTEGRATED CIRCUITS FOR 'HIGH QUALITY' TV-RECEIVERS'
- IEEE TRANSACTIONS ON CONSUMER ELECTRONICS, Bd.35, Nr.3, 30. August 1989, NEW YORK US Seiten 406 - 414, XP000065963 IMAIZUMI H. ET AL 'NEW PIF+SIF IC FOR IMPROVED PICTURE AND SOUND QUALITY'
- IEEE TRANSACTIONS ON CONSUMER ELECTRONICS, Bd.37, Nr.4, 30. November 1991, NEW YORK US Seiten 783 - 792, XP000275989 BRILKA J. ET AL 'AN ADVANCED 5V VIF-/SIF PLL FOR SIGNAL DETECTION IN TV SETS AND VTRS'
- IEEE TRANSACTIONS ON CONSUMER ELECTRONICS, Bd.31, Nr.4, 30. November 1985, NEW YORK US Seiten 617 - 626 WELTERSBACH W. 'System and Realization Aspects of Multistandard TV Receivers'
- IEEE TRANSACTIONS ON CONSUMER ELECTRONICS, Bd.32, Nr.3, 30. August 1986, NEW YORK US Seiten 169 - 180 ZUFFADA M. ET AL 'Single-Chip Multistandard Sound and Video IF Demodulator'
- IEEE 1989 INTERNATIONAL CONFERENCE ON CONSUMER ELECTRONICS. DIGEST OF TECHNICAL PAPERS. ICCE (CAT. NO.89CH2724-3), 6-9 JUNE 1989, ROSEMONT, IL, (US), PUBLISHED BY IEEE, NEWYORK, (US) Seiten 250 - 251, XP000076047 KAMM. W ET AL 'A NEW GENERATION OF ICs FOR HIGH PERFORMANCE VISION IF AND SOUND IF PROCESSING'

## Beschreibung

Die Erfindung bezieht sich auf eine Schaltungsanordnung zum Demodulieren der Tonsignale in einem Fernsehsignal.

Fernsehempfangsgeräte zum Empfangen von Fernsehsignalen unterschiedlicher Übertragungsnormen dienen der Vergrößerung der Empfangsmöglichkeiten verschiedener Sender und damit der universellen Verfügbarkeit auch in den Verbreitungsgebieten von Fernsehsendern, die mit verschiedenen Übertragungsnormen arbeiten; insbesondere dienen solche Geräte zum Empfang von Fernsehsendungen in verschiedenen Ländern. In neuerer Zeit stellt sich mit der Verfügbarkeit der Übertragung von Fernsehprogrammen über Satelliten auch innerhalb eines einzelnen Landes die Aufgabe, Fernsehsendungen unterschiedlicher Übertragungsnormen wahlweise empfangen zu können. Das Vorhalten je eines gesonderten, vollständigen Empfangsgerätes für jede dieser Normen ist dabei sehr unwirtschaftlich. Es wird daher angestrebt, möglichst alle an einem Empfangsort verfügbaren Übertragungsnormen mit einem einzigen Gerät verarbeiten zu können. Dabei stellt sich das Problem, daß die Fernsehsignale der unterschiedlichen Normen insbesondere im Zwischenfrequenzband, d.h. im auf eine zwischenfrequente Trägerschwingung modulierten Zustand, unterschiedliche Modulationsfrequenzen und -arten aufweisen und demzufolge bei der Demodulation unterschiedlicher Behandlungen bedürfen.

Die Erfindung hat die Aufgabe, eine Schaltungsanordnung zu schaffen, die mit geringem Aufwand eine verschiedenen Übertragungsnormen entsprechende Demodulation der Tonsignale in den Fernsehsignalen unterschiedlicher Übertragungsnormen ermöglicht.

Die erfindungsgemäße Schaltungsanordnung ist dazu ausgestattet mit einer Schwingungserzeugungsstufe, die aus einem auf eine erste zwischenfrequente Trägerschwingung modulierten Fernsehsignal (Fernseh-ZF-Signal) eine erste Schwingung ableitet, deren Frequenz mit derjenigen einer im Fernseh-ZF-Signal enthaltenen, zwischenfrequenten Bildträgerschwingung übereinstimmt und die mit der Bildträgerschwingung einen Phasenwinkel von wenigstens nahezu 90° einschließt, einer ersten Mischstufe, der an einem ersten Eingang die erste Schwingung zuführbar ist, einer Umschaltvorrichtung zum wahlweisen Zuführen des Fernseh-ZF-Signals oder eines auf eine zweite zwischenfrequente Trägerschwingung modulierten Tonsignals (Ton-ZF-Signal) an einen zweiten Eingang der ersten Mischstufe.

Durch die erfindungsgemäße Schaltungsanordnung ist es insbesondere möglich, in einfacher, d.h. aufwandsarmer Weise je nach Bedarf Tonsignale in einem Fernsehsignal nach dem sogenannten Intercarrier-Verfahren als auch nach dem QSS-Verfahren zu demodulieren. Dabei bietet sich für vereinfachte Schaltungsanordnungen zum Demodulieren der Tonsignale in Fernsehsignalen unterschiedlicher Übertragungsnormen bzw. für preisgünstige Schaltungen zur Verarbeitung von Stereo-Tonsignalen nach der B/G-Übertragungsnorm eine für sich genommen bekannte "Intercarrier"-Verarbeitung der Tonsignale an. Bei einer solchen Signalverarbeitung werden alle Signalverarbeitungsstufen, die speziell für die Demodulation nach dem QSS-Verfahren benötigt werden, nicht zum Einsatz gebracht, vielmehr wird das Ton-ZF-Signal, welches auf zwei zwischenfrequente Hilfsträgerschwingungen moduliert ist, deren Frequenzen typischerweise 5,5 MHz und 5,74 MHz höher sind als die Frequenz der Bildträgerschwingung, in auf die Demodulation des Fernseh-ZF-Signals folgenden Frequenzdemodulatorstufen demoduliert. Damit reduziert sich der für das QSS-Verfahren benötigte Filteraufwand.

Durch die erfindungsgemäße Schaltungsanordnung kann nun in einfacher Weise, d.h. mit einem einfachen Aufbau, sowohl nach dem Intercarrier-Verfahren als auch nach dem QSS-Verfahren demoduliert werden. Damit ist eine sehr einfache Anpassung an die jeweiligen Erfordernisse der zu verarbeitenden Fernsehsignale möglich.

Im Betrieb der erfindungsgemäßen Schaltungsanordnung nach dem QSS-Verfahren wird das Ton-ZF-Signal über die Umschaltvorrichtung dem zweiten Eingang der ersten Mischstufe zugeführt und in dieser mit der ersten Schwingung gemischt, die bis auf eine Phasendrehung von 90° der Bildträgerschwingung entspricht. Im Betrieb nach dem Intercarrier-Verfahren wird das Fernseh-ZF-Signal über die Umschaltvorrichtung dem zweiten Eingang der (ersten) Mischstufe zugeleitet und mit der (ersten) Schwingung gemischt. Aufgrund des Phasenwinkels von 90° zwischen der Bildträgerschwingung im Fernseh-ZF-Signal und der ersten Schwingung werden bei der Mischung Fernsehsignalanteile, die in den Frequenzbereich der Tonsignale einstreuen könnten, gut unterdrückt. Damit läßt sich eine fernsehsignalabhängige Störphasenmodulation weitestgehend vermeiden, so daß ein sehr guter Störabstand für die Tonsignale gewonnen wird. Da für die nachfolgende Verarbeitung der Tonsignale nur ein einziges ZF-Filter benötigt wird, über das die Tonsignale für alle Übertragungsnormen geleitet werden, ergibt sich für die erfindungsgemäße Schaltungsanordnung auch ein sehr geringer Aufwand an Filteranordnungen.

In einer bevorzugten Ausgestaltung der erfindungsgemäßen Schaltungsanordnung enthält diese eine Steuerstufe, durch die bei Erreichen eines vorgebbaren Signalpegels des Ton-ZF-Signals ein Umschaltsignal zum Betätigen der Umschaltvorrichtung ableitbar ist. Auf diese Weise kann das Betätigen der Umschaltvorrichtung ohne gesondertes Zuführen des Umschaltsignals und damit ohne eine gesonderte Leitung für dieses Umschaltsignal vorgenommen werden. Die Umschaltinformation wird vielmehr dem Ton-ZF-Signal, vorzugsweise als Gleichpegel, überlagert.

Die Steuerstufe umfaßt vorteilhaft eine Komparatoreinrichtung zum Detektieren des Erreichens des vorgebbaren Signalpegels durch das Ton-ZF-Signal. Bevorzugt kann in der Komparatoreinrichtung ein in dem Ton-ZF-Signal enthaltener Gleichpegel mit einem vorgebbaren Referenzpegel verglichen werden.

Eine besonders einfache Ausgestaltung ergibt sich dadurch, daß das Ton-ZF-Signal zweipolig zugeführt wird und daß zum Erreichen des vorgebbaren Signalpegels zwischen beiden Polen einer der Pole mit einem festen Referenzpegel beaufschlagt wird. Vorteilhaft wird somit beim Betrieb mit denjenigen Übertragungsnormen, in denen der ersten Mischstufe das Fernseh-ZF-Signal zugeführt werden soll, und daher der Signalweg des getrennten Ton-ZF-Signals nicht benötigt wird, letzterer mit einem festen Referenzpegel, insbesondere einem definierten Gleichpegel, ausgesteuert. Im einfachsten Fall wird dazu einer der Pole der Zuführung des Ton-ZF-Signals über einen Kurzschlußschalter an ein definiertes Potential, beispielsweise Masse gelegt. Die Komparatoreinrichtung schaltet dann den Signalweg des gesonderten Ton-ZF-Signals ab.

Nach einer vorteilhaften Weiterbildung der Erfindung wird diese mit einer Anordnung zum Demodulieren von Bildsignalen in dem Fernsehsignal in der Weise kombiniert, daß die Schwingungserzeugungsstufe aus dem Fernseh-ZF-Signal eine zweite Schwingung ableitet, deren Frequenz und Phase mit derjenigen der Bildträgerschwingung übereinstimmt und die einem ersten Eingang einer zweiten Mischstufe zugeleitet wird, deren zweitem Eingang das Fernseh-ZF-Signal zum Demodulieren zuführbar ist. Die Schwingungserzeugungsstufe wird dadurch auch für die Verarbeitung der Bildsignale ausgenutzt.

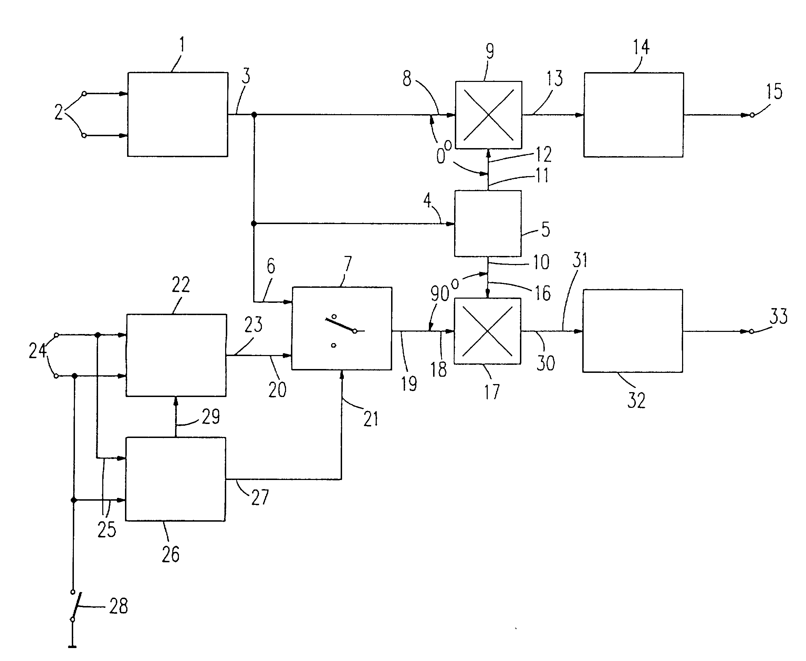

Ein Ausführungsbeispiel der Erfindung ist in der Zeichnung dargestellt und wird im nachfolgenden näher beschrieben. In dieser Schaltungsanordnung wird einer Fernseh-ZF-Eingangsstufe 1 über einen zweipolig dargestellten Eingang 2 ein Fernseh-ZF-Signal zugeleitet. Das Fernseh-ZF-Signal steht am Ausgang 3 der Fernseh-ZF-Eingangsstufe 1 nach einer darin erfolgten Bearbeitung, insbesondere einer Verstärkung, zur Verfügung. Es wird von hier einem Eingang 4 einer Schwingungserzeugungsstufe 5, einem ersten Eingang 6 einer Umschaltvorrichtung 7 und einem zweiten Eingang 8 einer zweiten Mischstufe 9 zugeleitet.

In der Schwingungserzeugungsstufe 5, die vorzugsweise eine phasenverriegelte Schleife enthält, werden aus dem Fernseh-ZF-Signal eine erste und eine zweite Schwingung abgeleitet, deren Frequenzen mit derjenigen einer im Fernseh-ZF-Signal enthaltenen, zwischenfrequenten Bildträgerschwingung übereinstimmt. Vorzugsweise entspricht diese Bildträgerschwingung auch der ersten zwischenfrequenten Trägerschwingung, auf die das Fernsehsignal moduliert ist. Die erste und die zweite Schwingung schließen untereinander einen Phasenwinkel von 90° ein, wobei die zweite Schwingung mit der Bildträgerschwingung in Phase ist. Die erste Schwingung wird von der Schwingungserzeugungsstufe 5 an einem ersten Ausgang 10, die zweite Schwingung an einem zweiten Ausgang 11 abgegeben.

Der zweiten Mischstufe 9 wird somit an ihrem zweiten Eingang 8 das Fernseh-ZF-Signal und an einem ersten Eingang 12 die zweite Schwingung vom zweiten Ausgang 11 der Schwingungserzeugungsstufe 5 zugeführt. In der zweiten Mischstufe 9 entsteht durch Mischung dieser Signale ein demoduliertes Fernsehsignal, welches am Ausgang 13 der zweiten Mischstufe 9 abgegeben und über einen Ausgangsverstärker 14 einem Anschluß 15 zugeleitet wird. Am Anschluß 15 kann das Fernsehsignal im Basisband sowie ein auf eine oder mehrere sogenannte Intercarrier-Schwingungen moduliertes Tonsignal entnommen werden.

Die erste Schwingung vom ersten Ausgang 10 der Schwingungserzeugungsstufe 5 wird einem ersten Eingang 16 einer ersten Mischstufe 17 zugeführt. Ein zweiter Eingang 18 der ersten Mischstufe 17 ist mit einem Ausgang 19 der Umschaltvorrichtung 7 verbunden. Ein zweiter Eingang 20 der Umschaltvorrichtung 7 kann wechselweise anstelle des ersten Eingangs 6 mit dem Ausgang 19 verbunden werden, wozu der Umschaltvorrichtung 7 über einen Umschalteingang 21 ein Umschaltsignal zuführbar ist. Vorzugsweise wird die Umschaltvorrichtung 7 in Abhängigkeit von der Übertragungsnorm des Fernseh-ZF-Signals am Eingang 2 derart betätigt, daß für wenigstens eine erste Übertragungsnorm des Fernsehsignals das Fernseh-ZF-Signal vom ersten Eingang 6 und für wenigstens eine zweite Übertragungsnorm des Fernsehsignals ein Ton-ZF-Signal vom zweiten Eingang 20 der Umschaltvorrichtung 7 dem zweiten Eingang 18 der ersten Mischstufe 17 zugeführt wird. Insbesondere wird bei der sogenannten B/G-Übertragungsnorm der erste Eingang 6 der Umschaltvorrichtung 7 mit ihrem Ausgang 19 verbunden, wobei die Ton-ZF-Signale dann im sogenannten Intercarrier-Verfahren demoduliert werden. Beim QSS-Verfahren wird dagegen vom zweiten Eingang 20 ein gesondertes Ton-ZF-Signal an den zweiten Eingang 18 der ersten Mischstufe 17 geleitet.

Dem zweiten Eingang 20 der Umschaltvorrichtung 7 ist eine Ton-ZF-Eingangsstufe 22 mit ihrem Ausgang 23 vorgeschaltet. Die Ton-ZF-Eingangsstufe 22 enthält bevorzugt Verstärkerstufen und gegebenenfalls andere Vorrichtungen zum Aufbereiten der Ton-ZF-Signale in eine Form, in der sie von der ersten Mischstufe 17 verarbeitbar sind. Der Ton-ZF-Eingangsstufe 22 wird an einem zweipoligen Eingang 24 das Ton-ZF-Signal zugeführt. Der Eingang 24 ist außerdem mit einem ebenfalls zweipolig ausgebildeten Eingang 25 einer Steuerstufe 26 verbunden, die an ihrem Ausgang 27, der mit dem Umschalteingang 21 der Umschaltvorrichtung 7 verbunden ist, das Umschaltsignal abgeben kann.

Die Steuerstufe 26 umfaßt eine Komparatoreinrichtung, durch die vorzugsweise die Differenz der Signalpegel an den beiden Anschlüssen des Eingangs 25 der Steuerstufe 26 bestimmt wird. Erreicht diese Differenz einen vorgebbaren Referenzpegel, überschreitet also das diese Differenz bildende Ton-ZF-Signal einen vorgebbaren Signalpegel, wird von der dieses Überschreiten detektierenden Komparatoreinrichtung in der Steuerstufe 26 ein Umschaltsignal am Ausgang 27 abgegeben, durch das in der Umschaltvorrichtung 7 der erste Eingang 6 mit dem Ausgang 19 verbunden wird. In dem in der Figur dargestellten Ausführungsbeispiel ist einer der Anschlüsse des Eingangs 24 bzw. des Eingangs 25 über einen Schalter 28 mit Masse verbindbar. Dadurch wird dieser Anschluß mit einem festen Referenzpegel, im vorliegenden Beispiel mit Massepotential, beaufschlagt. Die Spannunsdifferenz an den Anschlüssen des Eingangs 25, d.h. der Gleichpegel des hier zugeführten Ton-ZF-Signals, wird in dieser Weise über den vorgegebenen Signalpegel (Referenzpegel) angehoben. Mit dieser Anordnung wird ein gesonderter Eingang für die Steuerstufe 26 vermieden. Dies ist insbesondere dann bedeutsam, wenn die beschriebene Schaltungsanordnung auf einem einzigen Halbleiterkörper zusammgefaßt werden soll, da für einen derartigen, integrierten Schaltkreis dann die Anzahl der Anschlußkontakte vermindert bzw. niedrig gehalten werden kann. Der vorgebbare Signalpegel (Referenzpegel) beträgt in einem Dimensionierungsbeispiel 1 Volt, kann jedoch den vorliegenden Signalen leicht angepaßt werden. Der Schalter 28, beispielsweise mit Transistoren ausgeführt, kann außerhalb des beschriebenen, integrierten Schaltkreises angeordnet werden.

Von der Steuerstufe 26 ist eine Steuerleitung 29 an die Ton-ZF-Eingangsstufe 22 geführt. Über diese Steuerleitung 29 wird bevorzugt simultan mit dem Umschaltsignal am Ausgang 27 die Ton-ZF-Eingangsstufe 22 unwirksam geschaltet, wenn in der Umschaltvorrichtung 7 der erste Eingang 6 mit dem Ausgang 19 verbunden ist und somit von der Schaltungsanordnung das Ton-ZF-Signal vom Eingang 24 nicht ausgewertet wird. Dadurch kann in der entsprechenden Betriebsart die benötigte elektrische Leistung verringert werden.

Die erste Mischstufe 17 ist mit ihrem Ausgang 30 mit einem Eingang 31 einer Filter- und Verstärkerstufe 32 verbunden, an deren Ausgang 33 die Tonsignale als sogenannte Intercarrier-Signale abgegeben werden. Die Tonsignale weisen am Ausgang 30 für alle zu verarbeitenden Übertragungsnormen, d.h. in den durch die beiden Schaltstellungen der Umschaltvorrichtung 7 gekennzeichneten Betriebsfällen, derart übereinstimmende Signalparameter auf, daß die Filter-und Verstärkerstufe 32 für alle Übertragungsnormen ohne Änderung ihrer Dimensionierung eingesetzt werden kann. Beispielsweise werden beim Intercarrier-Verfahren die im Fernseh-ZF-Signal am Ausgang 3 der Fernseh-ZF-Eingangsstufe 1 enthaltenen Tonsignale mit der Bildträgerschwingung des Fernseh-ZF-Signals derart demoduliert, daß sie auf Tonträgerschwingungen der Frequenzen 5,5 MHz bzw. 5,74 MHz moduliert als "Intercarrier-Signale" am Ausgang 30 abgegeben werden. Im QSS-Betrieb werden die Ton-ZF-Signale von der Ton-ZF-Eingangsstufe 22 auf Trägerschwingungen von 33,4 MHz bzw. 33,16 MHz moduliert abgegeben. Durch Mischen mit der Bildträgerschwingung in der ersten Mischstufe 17 ergeben sich auch in diesem Fall die genannten "Intercarrier-Signale".

## Patentansprüche

1. Schaltungsanordnung zum Demodulieren der Tonsignale in einem Fernsehsignal mit
- einer Schwingungserzeugungsstufe, die aus einem auf eine erste zwischenfrequente Trägerschwingung modulierten Fernsehsignal (Fernseh-ZF-Signal) eine erste Schwingung ableitet, deren Frequenz mit derjenigen einer im Fernseh-ZF-Signal enthaltenen, zwischenfrequenten Bildträgerschwingung übereinstimmt und die mit der Bildträgerschwingung einen Phasenwinkel von wenigstens nahezu 90° einschließt,
- einer ersten Mischstufe, der an einem ersten Eingang die erste Schwingung zuführbar ist,
- einer Umschaltvorrichtung zum wahlweisen Zuführen des Fernseh-ZF-Signals oder eines auf eine zweite zwischenfrequente Trägerschwingung modulierten Tonsignals (Ton-ZF-Signal) an einen zweiten Eingang der ersten Mischstufe.

2. Schaltungsanordnung nach Anspruch 1,
dadurch gekennzeichnet, daß für wenigstens eine erste Übertragungsnorm des Fernsehsignals das Fernseh-ZF-Signal und für wenigstens eine zweite Übertragungsnorm des Fernsehsignals das Ton-ZF-Signal dem zweiten Eingang der ersten Mischstufe durch die Umschaltvorrichtung zuführbar ist.

3. Schaltungsanordnung nach Anspruch 1 oder 2,
gekennzeichnet durch eine Steuerstufe, durch die bei Erreichen eines vorgebbaren Signalpegels des Ton-ZF-Signals ein Umschaltsignal zum Betätigen der Umschaltvorrichtung ableitbar ist.

4. Schaltungsanordnung nach Anspruch 3,
dadurch gekennzeichnet, daß die Steuerstufe eine Komparatoreinrichtung umfaßt zum Detektieren des Erreichens des vorgebbaren Signalpegels.

5. Schaltungsanordnung nach Anspruch 3 oder 4,
dadurch gekennzeichnet, daß das Ton-ZF-Signal zweipolig zugeführt wird und daß zum Erreichen des vorgebbaren Signalpegels zwischen beiden Polen einer der Pole mit einem festen Referenzpegel beaufschlagt wird.

6. Schaltungsanordnung nach einem der vorhergehenden Ansprüche,
dadurch gekennzeichnet, daß die Schwingungserzeugungsstufe aus dem Fernseh-ZF-Signal eine zweite Schwingung ableitet, deren Frequenz und Phase mit derjenigen der Bildträgerschwingung übereinstimmt und die einem ersten Eingang einer zweiten Mischstufe zugeleitet wird, deren zweitem Eingang das Fernseh-ZF-Signal zum Demodulieren zuführbar ist.

## Claims

1. A circuit arrangement for demodulating the sound signals in a television signal, comprising
- an oscillation-generating stage which derives a first oscillation from a television signal (IF television signal) modulated on a first intermediate-frequency carrier oscillation, whose frequency corresponds to the frequency of an intermediate-frequency picture carrier oscillation in the IF television signal and encloses a phase angle of at least substantially 90° with the picture carrier oscillation,
- a first mixer stage, a first input of which can receive the first oscillation,
- a switching device for optionally applying the IF television signal or a sound signal (IF sound signal) modulated on a second intermediate-frequency carrier oscillation to a second input of the first mixer stage.

2. A circuit arrangement as claimed in claim 1, characterized in that for at least a first transmission standard of the television signal, the IF television signal can be applied by the switching device to the second input of the first mixer stage, and for at least a second transmission standard of the television signal, the IF sound signal can be applied by the switching device to the second input of the first mixer stage.

3. A circuit arrangement as claimed in claim 1 or 2, characterized by a control stage by which a switching signal for activating the switching device can be derived when a predeterminable signal level of the IF sound signal is reached.

4. A circuit arrangement as claimed in claim 3, characterized in that the control stage comprises a comparator for detecting the instant when the predeterminable signal level is reached.

5. A circuit arrangement as claimed in claim 3 or 4, characterized in that the IF sound signal is applied *via* two terminals and in that one of the terminals is impressed with a fixed reference level for reaching the predeterminable signal level between the two terminals.

6. A circuit arrangement as claimed in any one of the preceding claims, characterized in that the oscillation-generating stage derives a second oscillation from the IF television signal, whose frequency and phase correspond to those of the picture carrier oscillation and which is applied to a first input of a second mixer stage whose second input can receive the IF television signal for demodulation.

## Revendications

1. Circuit de démodulation des signaux audio dans un signal de télévision avec
- un étage de production d'oscillations qui dérive à partir d'un signal de télévision modulé sur une première onde porteuse de fréquence intermédiaire (signal ZF de télévision)une première oscillation dont la fréquence correspond à celle d'une onde porteuse vidéo de fréquence intermédiaire contenue dans le signal ZF de télévision et qui forme avec l'onde porteuse vidéo un déphasage de presque 90° au moins,
- un premier étage mélangeur auquel peut être amenée une première oscillation à une première entrée;
- un dispositif de commutation en vue d'amener au choix le signal ZF de télévision ou un signal audio modulé sur une deuxième onde porteuse de fréquence intermédiaire (signal ZF audio) à une deuxième entrée du premier étage mélangeur.

2. Circuit selon la revendication 1, caractérisé en ce que le signal ZF de télévision pour au moins une norme de transmission du signal de télévision et le signal ZF audio pour au moins une deuxième norme de transmission du signal de télévision peuvent être amenés à la deuxième entrée du premier étage mélangeur par le dispositif de commutation.

3. Circuit selon l'une des revendications 1 ou 2, caractérisé par un étage de commande par lequel un signal de commutation peut être dérivé en vue de l'actionnement du dispositif de commutation lorsqu'un niveau de signal à déterminer préalablement du signal ZF audio est atteint.

4. Circuit selon la revendication 3, caractérisé en ce que l'étage de commande comprend un dispositif comparateur pour détecter lorsque le niveau de signal à déterminer préalablement est atteint.

5. Circuit selon l'une des revendications 3 ou 4, caractérisé en ce que le signal ZF audio est amené à deux pôles et qu'en vue d'atteindre le niveau de signal à déterminer préalablement entre les deux pôles, l'un des pôles est alimenté en un niveau de référence fixe.

6. Circuit selon l'une des revendications précédentes, caractérisé en ce que l'étage de production des oscillations dérive à partir du signal ZF de télévision une deuxième oscillation dont la fréquence et la phase correspondent à celles de l'onde porteuse vidéo et qui est amenée à une première entrée d'un deuxième étage mélangeur à la deuxième entrée duquel le signal ZF de télévision peut être amené en vue de sa démodulation.
